(19) Europäisches Patentamt
European Patent Office
Office européen des brevets

(11) Numéro de publication : **0 100 247**
**B1**

(12) # FASCICULE DE BREVET EUROPÉEN

(45) Date de publication du fascicule du brevet : **11.10.89**

(51) Int. Cl.$^4$ : **H 01 B 3/44**, C 08 L 23/08

(21) Numéro de dépôt : **83401088.6**

(22) Date de dépôt : **31.05.83**

(54) **Compositions polymères réticulées de l'éthylène et d'au moins une alpha-oléfine, un procédé pour leur préparation et leur application à la fabrication de câbles pour le transport du courant électrique.**

(30) Priorité : **03.06.82 FR 8209632**

(43) Date de publication de la demande : **08.02.84 Bulletin 84/06**

(45) Mention de la délivrance du brevet : **11.10.89 Bulletin 89/41**

(84) Etats contractants désignés : **AT BE CH DE FR GB IT LI LU NL SE**

(56) Documents cités :
EP-A- 0 043 743
EP-A- 0 070 220
FR-A- 1 416 005
FR-A- 2 432 535
US-A- 3 105 057
US-A- 3 173 903

(73) Titulaire : **NORSOLOR S.A.**
**Tour Aurore Place des Reflets**
**F-92080 Paris la Défense Cedex 5 (FR)**

(72) Inventeur : **Haas, Armand**
**7 Parc Mercier**
**F-62670 Mazingarbe (FR)**
Inventeur : **Guerdoux, Lionel**
**28 Boulevard Basly**
**F-62670 Mazingarbe (FR)**

(74) Mandataire : **Dubost, Thierry**
**c/o NORSOLOR Service Propriété Industrielle B.P. 57**
**F-62670 Mazingarbe (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 100 247 B1

Jouve, 18, rue St-Denis, 75001 Paris, France

## Description

La présente invention concerne des compositions polymères réticulées de l'éthylène et d'au moins une α-oléfine, un procédé pour leur préparation et leur application à la fabrication de câbles pour le transport du courant électrique.

Le brevet français n° 2 432 535 décrit des compositions polymères fortement réticulées comprenant un copolymère linéaire d'éthylène et de propylène de masse volumique avant réticulation inférieure à 0,940 g/cm$^3$ et comprenant moins de 30 groupes méthyles pendants pour 1 000 atomes de carbone, avec une absence quasi complète de ramifications à chaînes longues ; leur degré de réticulation, exprimé sous la forme de la teneur en gel, est d'au moins 40 % et peut aller jusqu'à 95 %. Le brevet américain n° 3 105 057 décrit des compositions comprenant un copolymère éthylène/butène-1 contenant de 5 à 30 % en poids de butène-1, une charge finement divisée et un peroxyde organique comme agent de réticulation. Le brevet américain n° 3 173 903 décrit la réticulation de copolymères éthylène/propylène, de densité inférieure à 0,92 et contenant de 7 à 20 % en moles de propylène, préparés en phase liquide homogène sous une pression inférieure à 100 bars et à une température inférieure à 85 °C, au moyen d'un mélange de peroxyde et de noir de carbone.

Le demandeur a constaté que si l'on remplace, dans un procédé de réticulation, les matériaux connus par un copolymère de l'éthylène et d'au moins une α-oléfine à forte teneur en motifs dérivés de l'éthylène tel qu'il sera défini ci-dessous, le taux de gel du polymère réticulé obtenu est augmenté.

Un objet de la présente invention concerne des matières réticulées, de propriétés améliorées, obtenues à partir de copolymères de l'éthylène et d'au moins une α-oléfine, caractérisées en ce que leur taux de gel est compris entre 95 et 99 % et en ce que lesdits copolymères sont choisis parmi :

(a) les copolymères éthylène-propylène, comprenant, le cas échéant, jusqu'à 4 % en moles de motifs dérivés d'une autre α-oléfine, de masse volumique comprise entre 0,905 et 0,930 g/cm$^3$, d'indice de fluidité compris entre environ 0,4 et 3 dg/min, possédant de 32 à 62 groupes méthyle pour 1 000 atomes de carbone et tels que leur masse volumique ρ exprimée en g/cm$^3$ et leur taux m de groupes méthyle ont entre eux la relation : $0,9530 \leq \rho + 0,83\ m \leq 0,9568$,

(b) les copolymères d'éthylène et d'au moins une α-oléfine comprenant au moins 4 atomes de carbone, lesdits copolymères ayant une masse volumique comprise entre 0,905 et 0,940 g/cm$^3$, un indice de fluidité compris entre 0,2 et 20 dg/min, une teneur moyenne en motifs α-oléfines comprise entre 1 et 8 % en moles, comprenant des fractions cristallines et des fractions amorphes et présentant une distribution des motifs α-oléfine hétérogène, et ayant une teneur en motifs α-oléfine variant entre 0,2 et 5 fois leur teneur moyenne, selon les fractions considérées,

(c) les compositions comprenant jusqu'à 40 % en poids d'un polymère radicalaire d'éthylène et au moins 60 % en poids d'un copolymère du type (a) et/ou d'un copolymère du type (b),

(d) les copolymères de l'éthylène et d'au moins une α-oléfine ayant de 3 à 12 atomes de carbone, comprenant de 0,5 à 10 % en moles de motifs dérivés de l'α-oléfine, lesdits copolymères étant modifiés par introduction de branches à chaîne longue en quantité telle que leur viscosité limite mesurée soit comprise entre 1, 3 et 10 fois leur viscosité limite calculée à partir de la distribution des masses moléculaires,

(e) les compositions comprenant au moins 60 % en poids d'au moins un copolymère du type (a) et/ou du type (b) et jusqu'à 40 % en poids d'un polymère d'éthylène de densité comprise entre 0,956 et 0,970 et d'indice de fluidité compris entre 0,1 et 1 dg/min,

(f) les compositions contenant un mélange d'au moins un copolymère du type (a) et au moins un copolymère du type (b), et

(g) les compositions contenant plusieurs copolymères du type (b), plus particulièrement plusieurs copolymères ayant des indices de fluidité notablement différents.

Avantageusement, l'autre α-oléfine entrant dans la structure des copolymères du type (a) et l'α-oléfine utilisée à la préparation des copolymères du type (b) comprend de 4 à 10 atomes de carbone. Elle est choisie par exemple parmi le butène-1, le méthyl-4-pentène-1, l'hexène-1, l'octène-1, le décène-1.

Les copolymères des types (a) et (b) sont en outre susceptibles d'être obtenus par copolymérisation de l'éthylène et d'au moins une α-oléfine dans au moins un réacteur comportant au moins une zone, à une température comprise entre 180° et 320 °C et sous une pression comprise entre 300 et 2 500 bars, au moyen d'un système catalytique de type Ziegler comprenant d'une part au moins un activateur choisi parmi les hydrures et les composés organométaliques des métaux des groupes I à III de la Classification Périodique et d'autre part au moins un composé halogéné de métal de transition.

Les copolymères du type (a) ont, avantageusement, une masse moléculaire moyenne en nombre comprise entre 10 000 et 28 000, un indice de polydispersité (rapport de la masse moléculaire moyenne en poids à la masse moléculaire moyenne en nombre déterminées par chromatographie de perméation de gel) compris entre 7 et 14. Ils sont avantageusement obtenus par copolymérisation de l'éthylène et du propylène dans au moins un réacteur comportant au moins une zone, à une température comprise entre 180 °C et 320 °C et sous une pression comprise entre 300 et 2 500 bars, au moyen d'un système

catalytique de type Ziegler comprenant d'une part au moins un activateur choisi parmi les hydrures et les composés organométalliques des métaux des groupes I à III de la Classification Périodique et d'autre part au moins un composé halogéné de métal de transition, le flux gazeux alimentant le réacteur étant constitué en régime stationnaire de 65 à 85 % en poids d'éthylène et de 15 à 35 % en poids de propylène et le composé halogéné de métal de transition comprenant un composé complexe de formule $(MCl_a)(MgX_2)_y(AlCl_3)_z(RMgX)_b$ dans laquelle M est un métal choisi parmi le titane et le vanadium, X est un halogène, R est un radical hydrocarboné, $2 \leq a \leq 3$, $2 \leq y \leq 20$, $0 \leq z \leq 1/3$ et $0 \leq b \leq 1$.

Les copolymères du type (b) ont, avantageusement, une masse moléculaire moyenne en nombre comprise entre 15 000 et 60 000 et un indice de polydispersité compris entre 3 et 9. Leurs fractions cristallines peuvent présenter un pic unique de fusion, déterminé par analyse thermique différentielle, compris entre 118° et 130 °C et peuvent représenter de 20 à 50 % en poids du copolymère total de type (b). Les copolymères du type (b) peuvent comporter des motifs provenant de deux α-oléfines dont le rapport des teneurs moyennes respectives est compris entre 0,25 et 4. Dans ce dernier cas les copolymères du type (b) ont de préférence un indice de polydispersité compris entre 6 et 12. Les copolymères du type (b) sont avantageusement préparés par copolymérisation de l'éthylène et d'au moins une α-oléfine ayant au moins 4 atomes de carbone dans au moins un réacteur comportant au moins une zone, à une température comprise entre 180° et 320 °C et sous une pression comprise entre 300 et 2 500 bars, au moyen d'un système catalytique de type Ziegler comprenant d'une part un activateur choisi parmi les hydrures et les composés organométalliques des métaux des groupes I à III de la Classification Périodique et d'autre part au moins un composé halogéné de métal de transition, le rapport atomique du métal de l'activateur au métal de transition étant compris entre 1 et 10 et le temps de séjour moyen du système catalytique dans le réacteur de polymérisation étant compris entre 2 et 100 secondes, le flux gazeux alimentant le réacteur étant constitué en régime stationnaire de 10 à 80 % en poids d'éthylène et de 20 à 90 % en poids d'α-oléfine et le système catalytique présentant une réactivité vis-à-vis de l'éthylène très supérieure à sa réactivité vis-à-vis des α-oléfines.

Un exemple non limitatif de tels composés a pour formule :

$$(TiCl_3,\ 1/3AlCl_3)\ (MX_3)_x\ (MgCl_2)_y$$

dans laquelle $0{,}3 \leq x \leq 3$, $0 \leq y \leq 20$, M est un métal de transition choisi dans les groupes VB, VIB et VIII de la Classification Périodique et X est un halogène. La composition du flux gazeux alimentant le réacteur en régime stationnaire doit s'entendre comme une composition moyenne sur l'ensemble du réacteur, étant bien compris que cette composition n'est pas obligatoirement uniforme et peut varier le long du réacteur, particulièrement lorsque celui-ci comporte plusieurs zones. Cette composition varie selon la nature de l'α-oléfine considérée. Ainsi pour un copolymère binaire la teneur en poids en α-oléfine dans ce flux gazeux est comprise de préférence entre 15 et 70 % pour le butène-1, entre 35 et 90 % pour l'hexène-1. Lorsque le réacteur utilisé dans le procédé selon l'invention comporte plusieurs zones, on préfère le plus souvent injecter l'essentiel des α-oléfines dans les premières zones fonctionnant à des températures comprises entre 180° et 240 °C, tandis que la dernière zone fonctionne à une température comprise entre 240° et 320 °C sans injection complémentaire substantielle d'α-oléfines.

Avantageusement, les copolymères d'éthylène et d'au moins une α-oléfine du type (d) sont préparés selon le procédé qui consiste à copolymériser l'éthylène avec au moins une α-oléfine, dans au moins un réacteur en présence d'un système catalytique de type Ziegler, à une température de 180 °C à 320 °C et sous une pression de 300 à 2 500 bars, le temps de séjour moyen du système catalytique dans le réacteur étant compris entre 1 et 120 secondes, puis à mettre ensuite le copolymère obtenu en présence de 0,01 à 1 millimole par kg de copolymère d'au moins un initiateur de radicaux libres, à une température comprise entre 220 °C et 320 °C, pendant une durée comprise entre 5 et 200 secondes, sous une pression inférieure à 1 000 bars. Cette dernière pression est choisie en vue d'éviter la polymérisation du monomère n'ayant pas réagi et donc la formation de polyéthylène basse densité radicalaire. L'α-oléfine est soit introduite soit formée par oligomérisation de l'éthylène. La teneur en α-oléfine dans le mélange réactionnel est fonction de la nature de ladite α-oléfine ; elle est avantageusement comprise entre 15 et 35 % en poids pour le propylène, entre 5 et 65 % en poids pour le butène-1, entre 5 et 80 % en poids pour l'hexène-1. Elle n'est pas nécessairement constante le long du réacteur. La mise en présence du copolymère obtenu avec au moins un initiateur de radicaux libres peut être effectuée par injection d'une solution ou d'une suspension de l'initiateur de radicaux libres dans la dernière zone réactionnelle du réacteur ou de l'ensemble de réacteurs, étant entendu que la pression dans ledit réacteur est inférieure à 1 000 bars. Cette mise en présence peut également être effectuée dans un séparateur, fonctionnant sous une pression de 50 à 500 bars, situé après le réacteur et dont la fonction est de séparer le copolymère formé des monomères n'ayant pas réagi. Elle peut également avoir lieu dans la machine de transformation du copolymère telle que, par exemple, une extrudeuse ou une boudineuse, alimentée sous une pression comprise entre 1 bar et 25 bars ; il est bien connu que la pression dans l'extrudeuse peut atteindre 250 bars en fonction du profil de la vis d'extrusion. La mise en présence de l'initiateur de radicaux libres et du copolymère dans la machine de transformation a lieu avantageusement en utilisant une solution de l'initiateur ou un mélange maître préparé à sec.

Selon un mode particulier de réalisation, les matières réticulées selon l'invention peuvent être

obtenues à partir de compositions (type c) comprenant d'une part un copolymère de l'éthylène et d'une α-oléfine du type (a) tel que défini ci-dessus et d'autre part un polymère radicalaire de l'éthylène. Avantageusement le polymère radicalaire de l'éthylène a une masse volumique comprise entre 0,91 et 0,94 g/cm$^3$. Il est obtenu par polymérisation de l'éthylène sous haute pression et à haute température en présence d'un initiateur de radicaux libres. La polymérisation de l'éthylène peut être effectuée en présence de faibles quantités d'au moins un monomère copolymérisable avec l'éthylène tel que par exemple l'oxyde de carbone, les acides carboxyliques éthyléniquement insaturés, les esters dérivés desdits acides et d'un alcool ayant de 1 à 8 atomes de carbone, l'anhydride maléique ou l'acétate de vinyle.

Selon un mode particulier de réalisation, les compositions réticulées selon l'invention peuvent être obtenues à partir de compositions du type (e) comprenant d'une part au moins 60 % en poids d'au moins un copolymère du type (a) et/ou du type (b) et d'autre part jusqu'à 40 % en poids d'un polymère d'éthylène de densité comprise entre 0,956 et 0,970 et d'indice de fluidité compris entre 0,1 et 1 dg/min. Ledit polymère est généralement un homopolymère d'éthylène, dit polyéthylène haute densité, qui peut être fabriqué par différents procédés de polymérisation déjà connus, en particulier le procédé sous pression et température élevées dont plusieurs modes de réalisation ont été décrits dans les brevets français n° 2 436 374, 2 399 445, 2 445 343 et 2 445 344. Le polyéthylène haute densité présente de préférence une large répartition des masses moléculaires, son indice de polydispersité étant par exemple compris entre 8 et 18. Les compositions du type (e) ont une densité comprise entre 0,910 et 0,940.

Les compositions du type (g) sont par exemple un mélange de 2 copolymères d'éthylène et de butène-1 ayant un indice de fluidité compris entre 5 et 10 dg/min et obtenu à partir de copolymères respectivement d'indices de fluidité voisins de 1 et de 20 dg/min.

Les compositions réticulées selon l'invention peuvent contenir, comme il est connu en soi, des charges telles que le noir de carbone, des oxydes, des carbonates ou sulfates métalliques, des antioxydants, des lubrifiants, des pigments.

Elles sont obtenues par action, sur les copolymères d'éthylène et d'au moins une α-oléfine utilisés comme produit de départ, d'un composé peroxydique choisi parmi le peroxyde de benzoyle, le peroxyde dicumyle, le 1,3-bis (tertiobyutylperoxyisopropyl) benzène, le peroxyde de ditertiobutyle, le peroxyde de ditertioamyle, le peroxyde de lauroyle et leurs mélanges, à raison de 0,5 à 2,5 % en poids par rapport au polymère à réticuler. La réticulation est généralement effectuée à une température comprise entre 180° et 250 °C, pendant un temps compris entre 5 et 20 min. Elle peut être réalisée sous pression, ou dans des bains de sels fondus.

Les compositions réticulées selon l'invention trouvent une utilisation intéressante sous la forme de câbles pour le transport du courant électrique.

Les exemples non limitatifs suivants ont pour but d'illustrer l'invention. Les parties, sauf mention expresse, sont des parties en poids.

Les mesures effectuées sur les compositions réticulées consistent dans :
le taux d'insolubles (taux de gel) déterminé selon la norme ASTM D-2765/72 et exprimé en % en poids
le taux de fluage déterminé selon la norme UTE 33209 et exprimé en %
l'allongement à la rupture AR (exprimé en %) selon la norme NFC 32101
le pourcentage d'allongement rémanent selon la norme HN 33523 et CEI 538.

## Exemple 1

On a utilisé un copolymère éthylène-propylène du type (a) ayant les caractéristiques suivantes :
$\rho$ = 0,905 g/cm$_3$ ; % en moles de motifs propylène : 12
indice de fluidité (I.F.) : 3 dg/min
taux de groupes méthyles : 60 pour 1 000 atomes de carbone,
et qui a été préparé par copolymérisation d'éthylène et de propylène dans un réacteur autoclave de forme cylindrique fonctionnant sous une pression de 1 200 bars et muni intérieurement d'un agitateur et d'écrans métalliques qui délimitent trois zones de volume identique. La zone 1, maintenue à une température de 220 °C et alimentée par un flux de 40 kg/h d'éthylène et de 30 kg/h de propylène, reçoit un système catalytique comprenant d'une part du trichlorure de titane violet $TiCl_3$, 1/3 $AlCl_3$ et d'autre part du trioctylaluminium en quantité telle que le rapport atomique Al/Ti soit égal à 3. La zone 2, maintenue à une température de 240 °C, est alimentée par un flux de 20 kg/h d'éthylène et ne reçoit aucun catalyseur. La zone 3, à la sortie de laquelle le mélange réactionnel contenant le copolymère est évacué vers un dispositif de séparation et de recyclage, est maintenue à la température de 260 °C et alimentée par un flux de 20 kg/h d'éthylène et reçoit un système catalytique comprenant d'une part un composé complexe de formule $TiCl_3$, 1/3 $AlCl_3$, $6MgCl_2$ obtenu par cobroyage de trichlorure de titane violet et de chlorure de magnésium anhydre et d'autre part du diméthyléthyldiéthysiloxalane en quantité telle que le rapport atomique Al/Ti soit égal à 3. La copolymérisation est effectuée en présence de 0,1 % d'hydrogène en volume.

A 100 parties du copolymère obtenu on a ajouté 50 parties de noir de carbone dans un mélangeur à 80 °C pendant 3 minutes, puis 1 partie de polymérisat de 2,2,4-triméthyl-1,2-dihydroquinoléïne (antioxydant A) et 5 parties de [1,3-phénylènebis(1-méthyléthylidène)] bis [(1,1-diméthyléthyl)peroxyde] (Peroxyde

P) titrant 40 % en poids de matière active (soit 2 parties de peroxyde pur), dans un mélangeur à 120 °C pendant 5 minutes.

Le mélange obtenu a été réticulé sous une pression de 35 bars pendant 12 minutes à 180 °C.

On a mesuré le taux d'insolubles, le taux de fluage F à 150 °C pendant 15 minutes sous 2, 4 et 7 bars, et le pourcentage d'allongement rémanent. On a mesuré en outre le temps t en secondes nécessaire pour obtenir un taux de gel de 90 % à 185 °C, à l'aide de l'optimètre M.I.E. type I.F.C.

Exemple 2

On a utilisé un copolymère hétérogène de l'éthylène et de butène-1, du type (b) décrit ci-dessus, ayant les caractéristiques suivantes :

ρ = 0,918 $g/cm_3$ ; I.F. = 0,8 dg/min ; % en moles de motifs butène-1 = 3,4 %
masse moléculaire moyenne en nombre : 43.000
indice de polydispersité Mw/Mn : 3,6
taux de groupes méthyles latéraux : 17 pour 1 000 carbones
point de fusion de la fraction cristalline : 122 °C
hétérogénéité de la distribution du butène-1 : 0,5 fois à 2,2 fois la teneur moyenne, selon les fractions considérées.

Ce copolymère a été préparé dans un réacteur autoclave de forme cylindrique fonctionnant sous une pression de 900 bars et muni intérieurement d'un agitateur et d'écrans métalliques qui délimitent trois zones. La zone 1, maintenue à une température de 210 °C, a un volume double de celui de chacune des deux zones suivantes, est alimentée par un flux de 200 kg/h d'un mélange comprenant 36 % en poids de butène-1 et 64 % en poids d'éthylène et reçoit un système catalytique comprenant d'une part du diméthyléthyl-diéthylsiloxalane et d'autre part un composé de formule $TiCl_3$, 1/3 $AlCl_3$, $VCl_3$, en quantité respectivement telle que le rapport atomique Al/Ti soit égal à 3. La zone 2, maintenue à la température de 240 °C, est alimentée par un flux de 55 kg/h du même mélange que précédemment et reçoit le même système catalytique. Enfin la zone 3, à la sortie de laquelle le mélange réactionnel contenant le copolymère est évacué vers un dispositif de séparation et de recyclage, est maintenue à la température de 280 °C et ne reçoit ni monomère ni catalyseur. Le temps de séjour moyen du système catalytique dans le réacteur est de 43 secondes.

Le copolymère obtenu a été réticulé dans les mêmes conditions qu'à l'exemple 1.

Exemple 3

On a utilisé un terpolymère éthylène-propylène-butène-1 du type (a) préparé dans les conditions décrites à l'exemple 1, une fraction du flux gazeux de propylène étant remplacée par du butène-1, et qui a les caractéristiques suivantes :

ρ = 0,906 $g/cm^3$ ; I.F. : 0,7 dg/min
taux de groupes alkyles latéraux : 47 pour 1 000 C
% en moles de motifs propylène : 7
% en moles de motifs butène-1 : 2,4

Ce terpolymère a été réticulé dans les conditions de l'exemple 1.

Les résultats des mesures concernant les exemples 1 à 3 figurent au tableau I.

Tableau I

| Exemple | t | Taux d'insolubles % | Fluage % à 150°C, 15 min | | | Allongement rémanent % | | |
|---|---|---|---|---|---|---|---|---|
| | | | 2 bars | 4 bars | 7 bars | 2 bars | 4 bars | 7 bars |
| 1 | 250 | 96 | 4 | 8 | 28 | 0 | 8 | 28 |
| 2 | 192 | 97,8 | 0 | 12 | 12 | 0 | 0 | 12 |
| 3 | 184 | 97 | 0 | 8 | 8 | 0 | 8 | 4 |

Exemples 4 et 5

On a réticulé respectivement le copolymère de l'exemple 2 et le terpolymère de l'exemple 3 dans les conditions suivantes.

A 100 parties de polymère on a ajouté, dans un mélangeur pendant 5 minutes à 120 °C, 0,55 partie de l'antioxydant A et 32 parties de peroxyde P à 40 % de matière active (soit 1,28 partie de peroxyde P pur). Le mélange a été réticulé sous une pression de 35 bars pendant 12 minutes à 180 °C.

Les résultats des mesures figurent au tableau II.

Tableau II

| Exemple | t | Taux d'insolubles % | Fluage % à 150°C, 15 min | | Allongement rémanent % | |
|---|---|---|---|---|---|---|
| | | | 2 bars | 4 bars | 2 bars | 4 bars |
| 4 | 186 | 97,3 | 4 | 24 | 0 | 4 |
| 5 | 182 | 95,7 | 8 | 20 | 0 | 0 |

Exemples 6 et 7

On a ajouté à 100 parties de copolymère du type (a) décrit à l'exemple 1, dans les conditions décrites aux exemples 4 et 5 : 0,5 partie de l'antioxydant A ainsi que les quantités, indiquées au tableau III en parties en poids, du peroxyde P, utilisé à l'état pur.

La réticulation a été effectuée à la température de 180 °C pendant un temps de contact de 12 minutes. On a mesuré les caractéristiques des composés réticulés obtenus. Le fluage a été mesuré sous 2 bars à 200 °C.

Les résultats des mesures figurent au tableau III.

Tableau III

| Exemple | Peroxyde P | Taux d'insolubles % | Fluage % 2 bars à 200°C, 15 min | A.R. % | t |
|---|---|---|---|---|---|
| 6 | 0,935 | 96,6 | 15 | 688 | 223 |
| 7 | 1,25 | 98,2 | 10 | 602 | 214 |

## Revendications

1. Matière réticulée, de propriétés améliorées, obtenue à partir de copolymères de l'éthylène et d'au moins une α-oléfine, caractérisée en ce que son taux de gel est compris entre 95 et 99 % et en ce que lesdits copolymères sont choisis parmi :

(a) les copolymères éthylène-propylène, comprenant, le cas échéant, jusqu'à 4 % en moles de motifs dérivés d'une autre α-oléfine, de masse volumique comprise entre 0,905 et 0,930 g/cm³, d'indice de fluidité compris entre environ 0,4 et 3 dg/min, possédant de 32 à 62 groupes méthyles pour 1 000 atomes de carbone, tels que leur masse volumique ρ exprimée en g/cm³ et leur taux m de groupes méthyles ont entre eux la relation :

$$0{,}9530 \leq \rho + 0{,}83\ m \leq 0{,}9568,$$

(b) les copolymères d'éthylène et d'au moins une α-oléfine comprenant au moins 4 atomes de carbone, lesdits copolymères ayant une masse volumique comprise entre 0,905 et 0,940 g/cm³, un indice de fluidité compris entre 0,2 et 20 dg/min, une teneur moyenne en motifs α-oléfines comprise entre 1 et 8 % en moles, comprenant des fractions cristallines et des fractions amorphes et présentant une distribution des motifs α-oléfine hétérogène, ayant une teneur en motifs α-oléfines variant entre 0,2 et 5 fois leur teneur moyenne selon les fractions considérées,

(c) les compositions comprenant jusqu'à 40 % en poids d'un polymère radicalaire d'éthylène et au moins 60 % en poids d'un copolymère du type (a) et/ou d'un copolymère du type (b),

(d) les copolymères de l'éthylène et d'au moins une α-oléfine ayant de 3 à 12 atomes de carbone, comprenant de 0,5 à 10 % en moles de motifs dérivés de l'α-oléfine, modifiés par introduction de branches à chaîne longue en quantité telle que leur viscosité limite mesurée soit comprise entre 1,3 et 10 fois leur viscosité limite calculée à partir de la distribution des masses moléculaires,

(e) les compositions comprenant au moins 60 % en poids d'au moins un copolymère du type (a)

et/ou du type (b) et jusqu'à 40 % en poids d'un polymère d'éthylène de densité comprise entre 0,956 et 0,970 et d'indice de fluidité compris entre 0,1 et 1 dg/min,

(f) les compositions contenant un mélange d'au moins un copolymère du type (a) et au moins un copolymère du type (b), et

(g) les compositions contenant plusieurs copolymères du type (b), plus particulièrement plusieurs copolymères ayant des indices de fluidité notablement différents,

les copolymères des types (a) et (b) étant susceptibles d'être obtenus par copolymérisation de l'éthylène et d'au moins une α-oléfine dans au moins un réacteur comportant au moins une zone, à une température comprise entre 180° et 320 °C et sous une pression comprise entre 300 et 2 500 bars, au moyen d'un système catalytique de type Ziegler comprenant d'une part au moins un activateur choisi parmi les hydrures et les composés organométalliques des métaux des groupes I à III de la Classification Périodique et d'autre part au moins un composé halogéné de métal de transition.

2. Matière réticulée selon la revendication 1, caractérisée en ce que l'α-oléfine comprend de 4 à 10 atomes de carbone.

3. Matière réticulée selon l'une des revendications 1 et 2, caractérisée en ce que les copolymères de type (a) ont une masse moléculaire moyenne en nombre comprise entre 10 000 et 28 000.

4. Matière réticulée selon l'une des revendications 1 et 2, caractérisée en ce que les copolymères de type (b) ont une masse moléculaire moyenne en nombre comprise entre 15 000 et 60 000.

5. Matière réticulée selon l'une des revendications 1 à 3, caractérisée en ce que les copolymères de type (a) ont un indice de polydispersité compris entre 7 et 14.

6. Matière réticulée selon l'une des revendications 1, 2 et 4, caractérisée en ce que les copolymères de type (b) ont un indice de polydispersité compris entre 3 et 9.

7. Matière réticulée selon l'une des revendications 1, 2, 4 et 6, caractérisée en ce que les fractions cristallines des copolymères de type (b) présentent de 20 à 50 % en poids du copolymère total total de type (b).

8. Matière réticulée selon l'une des revendications 1, 2, 4, 6 et 7, caractérisée en ce que les copolymères de type (b) comportent des motifs provenant des deux α-oléfines dont le rapport des teneurs moyennes respectives est compris entre 0,25 et 4.

9. Matière réticulée selon la revendication 8, caractérisée en ce que les copolymères de type (b) ont un indice de polydispersité compris entre 6 et 12.

10. Procédé de préparation de matière réticulée selon l'une des revendications 1 à 9, caractérisé en ce qu'on fait agir 0,5 à 2,5 parties en poids d'un composé peroxydique sur 100 parties en poids de copolymère de l'éthylène et d'au moins une α-oléfine.

11. Procédé selon la revendication 10, caractérisé en ce qu'il est appliqué à la fabrication de câbles pour le transport du courant électrique.

12. Matière réticulée selon la revendication 1 caractérisée en ce que les copolymères de la variante (d) sont préparés selon le procédé qui consiste à copolymériser l'éthylène avec au moins une α-oléfine, dans au moins un réacteur en présence d'un système catalytique de type Ziegler, à une température de 180 °C à 320 °C et sous une pression de 300 à 2 500 bars, le temps de séjour moyen du système catalytique dans le réacteur étant compris entre 1 et 120 secondes, puis à mettre ensuite le copolymère obtenu en présence de 0,01 à 1 millimole par kg de copolymère d'au moins un initiateur de radicaux libres, à une température comprise entre 220 °C et 320 °C, pendant une durée comprise entre 5 et 200 secondes, sous une pression inférieure à 1 000 bars.

## Claims

1. Crosslinked material, having improved properties, obtained from copolymers of ethylene and of at least one α-olefine, characterized in that its gel factor is between about 95 and 99 % and in that the said copolymers are chosen from amongst :

(a) ethylene/propylene copolymers which comprise, if appropriate, up to 4 mol% of units derived from another α-olefine, have a density of between 0.905 and 0.930 g/cm³ and a melt index of between about 0.4 and 3 dg/min, possessing from 32 to 62 methyl groups per 1,000 carbon atoms and are such that their density ρ, expressed in g/cm³, and the proportion m of methyl groups therein are related to one another as follows :

$$0.9530 \leq \rho + 0.83\ m \leq 0.9568,$$

(b) copolymers of ethylene and of at least one α-olefine containing at least 4 carbon atoms, the said copolymers having a density of between 0.905 and 0.940 g/cm³, a melt index of between 0.2 and 20 dg/min and an average proportion of α-olefine units of between 1 and 8 mol%, comprising crystalline fractions and amorphous fractions and having a heterogeneous distribution of the α-olefine units, and having a proportion of α-olefine units varying between 0.2 and 5 times their average proportion, depending on the fractions in question,

(c) compositions comprising up to 40 % by weight of an ethylene polymer prepared by free radical polymerization and at least 60 % by weight of a copolymer of type (a) and/or of a copolymer of type (b),

(d) copolymers of ethylene and of at least one α-olefine having from 3 to 12 carbon atoms, the said copolymers comprising from 0.5 to 10 mol% of units derived from the α-olefine, modified by the introduction of long-chain branches in such a quantity that their measured limiting viscosity is between 1.3 and 10 times their limiting viscosity calculated from the molecular weight distribution,

(e) compositions comprising at least 60 % by weight of at least one copolymer of type (a) and/or of type (b) and up to 40 % by weight of an ethylene polymer having a specific gravity of between 0.956 and 0.970 and a melt index of between 0.1 and 1 dg/min,

(f) compositions containing a mixture of at least one copolymer of type (a) and at least one copolymer of type (b), and

(g) compositions containing several copolymers of type (b), more particularly several copolymers having markedly different melt indices,

it being possible for the copolymers of types (a) and (b) to be obtained by copolymerization of ethylene and at least one α-olefine in at least one reactor comprising at least one zone, at a temperature of between 180° and 320 °C and under a pressure of between 300 and 2,500 bars, by means of a Ziegler-type catalyst system comprising, on the one hand, at least one activator chosen from amongst the hydrides and organometallic compounds of the metals of groups I to III of the Periodic Table, and, on the other hand, at least one transition metal halogen.

2. Crosslinked material according to Claim 1, characterized in that the α-olefine contains from 4 to 10 carbon atoms.

3. Crosslinked material according to one of Claims 1 and 2, characterized in that the copolymers of type (a) have a number-average molecular weight of between 10,000 and 28,000.

4. Crosslinked material according to one of Claims 1 and 2, characterized in that the copolymers of type (b) have a number-average molecular weight of between 15,000 and 60,000.

5. Crosslinked material according to one of Claims 1 to 3, characterized in that the copolymers of type (a) have a polydispersity index of between 7 and 14.

6. Crosslinked material according to one of Claims 1, 2 and 4, characterized in that the copolymers of type (b) have a polydispersity index of between 3 and 9.

7. Crosslinked material according to one of Claims 1, 2, 4 and 6, characterized in that the crystalline fractions of the copolymers of type (b) have a single melting peak at between 118° and 130 °C and represent from 20 to 50 % by weight of the total copolymer of type (b).

8. Crosslinked material according to one of Claims 1, 2, 4, 6 and 7, characterized in that the copolymers of type (b) contain units originating from two α-olefines, the respective average proportions of which are in a ratio of between 0.25 and 4.

9. Crosslinked material according to Claim 8, characterized in that the copolymers of type (b) have a polydispersity index of between 6 and 12.

10. Process for the preparation of the crosslinked material according to one of Claims 1 to 9, characterized in that 0.5 to 2.5 parts by weight of a peroxide compound is reacted with 100 parts by weight of copolymer of ethylene and at least one α-olefine.

11. Process according to Claim 10, characterized in that it is applied to the manufacture of cables for carrying electric current.

12. Crosslinked material according to Claim 1, characterized in that the copolymers of variant (d) are prepared according to the process which consists in copolymerizing ethylene with at least one α-olefine, in at least one reactor, in the presence of a Ziegler-type catalyst system, at a temperature of 180 °C to 320 °C and unter a pressure of 300 to 2,500 bars, the average residence time of the catalyst system in the reactor being between 1 and 120 seconds, and then by bringing the copolymer obtained into contact with from 0.01 to 1 millimol, per kg of copolymer, of at least one free radical initiator, at a temperature of between 220 °C and 320 °C, for a period of between 5 and 200 seconds, under a pressure of less than 1,000 bars.

**Patentansprüche**

1. Vernetztes Material mit verbesserten Eigenschaften, das erhalten wurde aus Copolymeren von Äthylen und mindestens einem α-Olefin, dadurch gekennzeichnet, daß sein Gelanteil zwischen 95 und 99 % und daß die genannten Copolymere ausgewählt sind aus

(a) den Äthylen/Propylen-Copolymeren, die gegebenenfalls bis zu 4 Mol.-% an Einheiten eines weiteren α-Olefins enthalten, wobei die Copolymere eine Dichte zwischen 0,905 und 0,930 g/cm³ und einen Fließindex zwischen etwa 0,4 und 3 dg/min besitzen und 32 bis 62 Methylgruppen auf 1 000 Kohlenstoffatome enthalten, sodaß ihre in g/cm³ ausgedrückte Dichte ρ und ihr Methylgruppenanteil zueinander die Beziehung :

$$0{,}9530 \leq \rho + 0{,}83\ m \leq 0{,}9568$$

haben,

(b) den Copolymeren von Äthylen und mindestens einem α-Olefin mit mindestens 4 Kohlenstoff-

atomen, wobei die genannten Copolymere eine Dichte zwischen 0,905 und 0,940 g/cm$^3$, einen Fließindex zwischen 0,2 und 20 dg/min und einen durchschnittlichen Gehalt an α-Olefin-Einheiten zwischen 1 und 8 Mol.-% besitzen, kristalline Fraktionen und amorphe Fraktionen enthalten und eine heterogene Verteilung der α-Olefin-Einheiten aufweisen, wobei ihr Gehalt an α-Olefin-Einheiten je nach den in Betracht gezogenen Fraktionen zwischen dem 0,2 fachen und dem 5 fachen ihres durchschnittlichen Gehalts an α-Olefin-Einheiten variiert,

(c) den Zusammensetzungen enthaltend bis zu 40 Gew.-% eines Äthylenradikalpolymers und mindestens 60 Gew.-% eines Copolymers des Typs (a) und/oder eines Copolymers des Typs (b),

(d) den Copolymeren von Äthylen und mindestens einem α-Olefin mit 3 bis 12 Kohlenstoffatomen, welche 0,5 bis 10 Mol.-% an von dem α-Olefin abstammenden Einheiten enthalten, die modifiziert sind durch Einführen von langkettigen Verzweigungen in einer solchen Menge, daß ihre gemessene Grenzviskosität zwischen dem 1,3 fachen und 10 fachen ihrer aus der Molekularmassenverteilung berechneten Grenzviskosität beträgt,

(e) den Zusammensetzungen enthaltend mindestens 60 Gew.-% mindestens eines Copolymers des Typs (a) und/oder des Typs (b) und bis zu 40 Gew.-% eines Äthylenpolymers einer Dichte zwischen 0,956 und 0,970 und eines Fließindex zwischen 0,1 und 1 dg/min,

(f) den Zusammensetzungen enthaltend eine Mischung aus mindestens einem Copolymer des Typs (a) und mindestens einem Copolymer des Typs (b), und

(g) den Zusammensetzungen enthaltend mehrere Copolymere des Typs (b), insbesondere mehrere Copolymere mit sehr unterschiedlichen Fließindices,

wobei die Copolymere des Typs (a) und des Typs (b) erhalten werden können durch Copolymerisation von Äthylen und mindestens einem α-Olefin in mindestens einem mindestens eine Zone enthaltenden Reaktor bei einer Temperatur zwischen 180° und 320 °C, unter einem Druck zwischen 300 und 2 500 bar und mit Hilfe einens Katalysatorsystems des Typs Ziegler, das einerseits mindestens einen Aktivator, der ausgewählt ist aus den Hybriden und den organometallichen Verbindungen der Metalle der Gruppen I bis III des Periodensystems, und anderseits mindestens eine Halogenverbindung eines Übergangsmetalls enthält.

2. Vernetztes Material nach Anspruch 1, dadurch gekennzeichnet, daß das α-Olefin 4 bis 10 Kohlenstoffatome enthält.

3. Vernetztes Material nach Anspruch 1 oder 2, dadurch gekennzeichnet, daß die Copolymere des Typs (a) eine in Zahlen ausgedrückte mittlere Molekularmasse zwischen 10 000 und 28 000 besitzen.

4. Vernetztes Material nach Anspruch 1 oder 2, dadurch gekennzeichnet, daß die Copolymere des Typs (b) eine in Zahlen ausgedrückte Molekularmasse zwischen 15 000 und 60 000 besitzen.

5. Vernetztes Material nach einem der Ansprüche 1 bis 3, dadurch gekennzeichnet, daß die Copolymere des Typs (a) eine Polydispersitätszahl zwischen 7 und 14 aufweisen.

6. Vernetztes Material nach einem der Ansprüche 1, 2 und 4, dadurch gekennzeichnet, daß die Copolymere des Typs (b) eine Polydispersitätszahl zwischen 3 und 9 aufweisen.

7. Vernetztes Material nach einem der Ansprüche 1, 2, 4 und 6, dadurch gekennzeichnet, daß die kristallinen Fraktionen der Copolymere des Typs (b) einen einzigen Schmelzpeak zwischen 118° und 130 °C aufweisen und 20 bis 50 Gew.-% des gesamten Copolymers des Typs (b) ausmachen.

8. Vernetztes Material nach einem der Ansprüche 1, 2, 4, 6 und 7, dadurch gekennzeichnet, daß die Copolymere des Typs (b) von zwei α-Olefinen abstammende Einheiten enthalten, wobei das Verhältnis ihrer jeweiligen durchschnittlichen Anteile zwischen 0,25 und 4 beträgt.

9. Vernetztes Material nach Anspruch 8, dadurch gekennzeichnet, daß die Copolymere des Typs (b) eine Polydispersitätszahl zwischen 6 und 12 besitzen.

10. Verfahren zur Herstellung von vernetztem Material nach einem der Ansprüche 1 bis 9, dadurch gekennzeichnet, daß man 0,5 bis 2,5 Gewichtsteile einer Peroxidverbindung aus 100 Gewichtsteile eines Copolymers von Äthylen und mindestens einem α-Olefin einwirken läßt.

11. Verfahren nach Anspruch 10, dadurch gekennzeichnet, daß es bei der Erzeugung von Kabeln für den Transport elektrischen Stromes angewendet wird.

12. Vernetztes Material nach Anspruch 1, dadurch gekennzeichnet, daß die Copolymere der Variante (d) nach einem Verfahren hergestellt sind, das darin besteht, daß man Äthylen mit mindestens einem α-Olefin in mindestens einem Reaktor in Gegenwart eines Katalysatorsystems des Typs Ziegler bei einer Temperatur von 180° bis 230 °C und unter einem Druck von 300 bis 2 500 bar copolymerisiert, wobei die Verweilzeit des Katalysatorsystems in dem Reaktor zwischen 1 und 120 s beträgt, und danach das erhaltene Copolymer in Gegenwart von 0,01 bis 1 Millimol pro kg des Copolymer mindestens einen Initiator in Form freier Radikale für eine zwischen 5 und 200 s liegende Zeitspanne bei einem Druck von weniger als 1 000 bar auf eine Temperatur zwischen 220° und 320 °C bringt.